# EUROPEAN PATENT APPLICATION

(11) **EP 4 083 333 A2**
(43) Date of publication of application: **02.11.2022**
(21) Application number: 22165718.2
(22) Date of filing: 31.03.2022
(51) Int. Cl.: E02F 3/34, B62D 55/00, E02F 9/20, G05G 9/047, B66C 13/56, B66F 9/075

(54) **MULTI-FUNCTION JOYSTICK WITH ASYMMETRIC GRIP FOR A CONSTRUCTION MACHINE**

(30) Priority: 26.04.2021 US 202117302175
(71) Applicant: Caterpillar Inc., Peoria, IL 61629-9510 (US)
(72) Inventor: Mortensen, Michael, Clayton, 27520 (US); Ritchie, Christian, Morton, 61550 (US); Mays, Christopher, Raleigh, 27615 (US)
(74) Representative: Boult Wade Tennant LLP

(57) **Abstract**

A system for controlling a machine (100) may include a first joystick (160) comprising a first asymmetric grip portion (310) with a first asymmetric faceplate (320). The first asymmetric faceplate (320) may comprise a first subset of primary controls that include a first plurality of input elements (330) configured to control an operation of an implement mounted to the machine, and a first subset of secondary controls that include a second plurality of input elements (340) configured to control an operation of a display device of the machine. The system may further include a second joystick (170) comprising a second asymmetric grip portion (710) with a second asymmetric faceplate (720). The second asymmetric faceplate (720) may comprise a second subset of the primary controls that include a third plurality of input elements (730) configured to control an operation of the implement, and a second subset of the secondary controls that include a fourth plurality of input elements (740) configured to control a sound.

## Description

### Technical Field

The present disclosure relates generally to controlling a machine and, for example, to controlling a machine using one or more multi-function joysticks.

### Background

A machine, such as a skid steer loader, may perform different tasks (e.g., at a work site) using an implement. For example, the machine may perform an earth moving task, a snow moving task, and/or another material moving task. The machine may include joysticks (e.g., two joysticks) for controlling the machine to perform the different tasks. In this regard, an operator may use the joysticks concurrently to control the machine to perform the different tasks. In other words, the operator may use both hands to operate the joysticks to control the machine to perform the different tasks, possibly simultaneously.

An operator cabin of the machine may include controls (e.g., buttons) that may be used to control an operation of the machine and/or the implement. In some instances, multiple controls (e.g., up to thirteen controls) may be used to control multiple operations of the machine and/or the implement in an effective and efficient manner. However, spatial constraints in an operator cabin (of the skid steer loader) may limit a number of controls that may be included in the operator cabin. At best, controls may be limited to a vertical surface inside the operator cabin.

Typically, before interacting with a control (included in the operator cabin), the operator may cause the machine to suspend performing a task and to be stationary to enable the operator to remove one hand from one of the joysticks in order to interact with the control. The operator may cause the machine to resume performing the task after interacting with the control. Causing the machine to suspend and resume performing a task in such a manner may negatively affect productivity at the work site and/or may negatively affect a durability of the machine.

U.S. Patent No. 10,640,950 (the '950 patent) discloses an operation device that includes a hold portion having a base end and a leading end, and an operation portion attached to the leading end of the hold portion. The '950 patent further discloses that the operation portion includes a finger rest extending substantially along a direction in which the hold portion extends from the base end to the leading end, and first to third operation switches disposed with the finger rest interposed therebetween. While the '950 patent discloses an operation device, the '950 patent does not disclose that the operation device addresses the issues related to spatial constraints of an operator cabin and related to interacting with controls, as discussed above.

The multi-function joysticks of the present disclosure solve one or more of the problems set forth above and/or other problems in the art.

### Summary

A joystick for operating a machine includes an asymmetric grip portion with an asymmetric faceplate, wherein the asymmetric faceplate comprises primary controls and secondary controls, wherein the primary controls include: a first plurality of input elements configured to control an operation of an implement mounted to the machine, and an input element configured to cause information regarding the implement, which is based on data provided by the implement, to be presented on a display device of the machine, and wherein the secondary controls include a second plurality of input elements at least one of which is configured to control a sound output by the machine.

A system for controlling a machine includes a first joystick comprising a first asymmetric grip portion with a first asymmetric faceplate, wherein the first asymmetric faceplate comprises: a first subset of primary controls that include a first plurality of input elements configured to control an operation of an implement mounted to the machine, and a first subset of secondary controls that include a second plurality of input elements configured to control an operation of a display device of the machine; and a second joystick comprising a second asymmetric grip portion with a second asymmetric faceplate, wherein the second asymmetric faceplate comprises: a second subset of the primary controls that include a third plurality of input elements configured to control an operation of the implement, and a second subset of the secondary controls that include a fourth plurality of input elements configured to control a sound output by the machine.

A machine includes a first machine control component comprising a first asymmetric grip portion with a first asymmetric faceplate, wherein the first asymmetric faceplate comprises: a first subset of primary controls that include a first plurality of input elements configured to control an operation of an implement mounted to the machine, and a first subset of secondary controls that include a second plurality of input elements configured to control an operation of a display device of the machine; and a second machine control component comprising a second asymmetric grip portion with a second asymmetric faceplate, wherein the second asymmetric faceplate comprises: a second subset of the primary controls that include: a third plurality of input elements configured to control an operation of the implement, and an input element configured to cause information regarding the implement, which is based on data provided by the implement, to be presented on the display.

### Brief Description of the Drawings

Fig. 1 is a diagram of an example machine described herein.
Fig. 2 is a diagram of a top view of the operator cabin of Fig. 1 described herein.
Fig. 3 is a diagram of an example machine control component described herein.
Fig. 4 is a diagram of a left side view of an example machine control component described herein.
Fig. 5 is a diagram of a right side view of an example machine control component described herein.
Fig. 6 is a diagram of a rear view of an example machine control component described herein.
Fig. 7 is a diagram of an example machine control component described herein.
Fig. 8 is a diagram of a left side view of an example machine control component described herein.
Fig. 9 is a diagram of a right side view of an example machine control component described herein.
Fig. 10 is a diagram of a rear view of an example machine control component described herein.

### Detailed Description

The present disclosure relates to machine control components (e.g., joysticks) that control various operations of a machine and/or an implement of the machine. For example, the machine control components may include input elements (e.g., hydraulic controls) configured to control various operations and/or movements of the implement, input elements configured to control a sound output by the machine, input elements configured to control a speed and/or direction of the machine, and input elements configured to control an operation of a display device of the machine concurrently with an operation of the machine (e.g., concurrently with an operation of an implement of the machine and/or a movement of the machine).

The input elements (discussed above) may be provided in a compact manner that addresses spatial constraints in an operator cabin of the machine. As an example, a first subset of the input elements may be provided on an asymmetric faceplate of an asymmetric grip portion of a first joystick and a second subset of the input elements may be provided on an asymmetric faceplate of an asymmetric grip portion of a second joystick. Additionally, the input elements are available to be selected by the operator without requiring the operator to remove a hand from the disclosed machine control components. The term "machine" may refer to a machine that performs an operation associated with an industry such as, for example, mining, construction, farming, transportation, or another industry. Moreover, one or more implements may be connected to the machine.

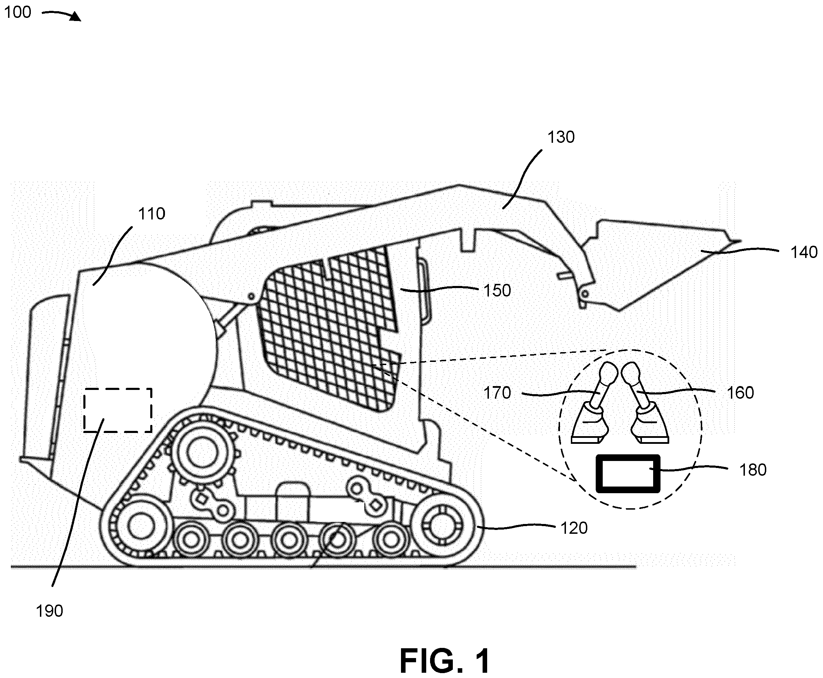

Fig. 1 is a diagram of an example machine 100 described herein. As shown in Fig. 1, machine 100 is embodied as a material moving machine, such as a skid steer loader. Alternatively, machine 100 may be another type of material moving machine such as a bulldozer, a track-type tractor, a wheel loader, a multi-terrain loader (MTL), a compact track loader (CTL), a compact wheel loader (CWL), and/or a similar machine.

As shown in Fig. 1, machine 100 includes a machine body 110, ground engaging members 120, lift arms 130, an implement 140, and an operator cabin 150. Ground engaging members 120 may be mounted on machine body 110 and are driven by one or more engines and drive trains (not shown). Ground engaging members 120 may be configured to propel machine 100. As shown in Fig. 1, ground engaging members 120 includes tracks. Alternatively, ground engaging members 120 may include wheels, rollers, and/or similar members.

Lift arms 130 may be mounted on machine body 110 and configured to raise and lower implement 140. Implement 140 may be mounted on distal ends of lift arms 130. As shown in Fig. 1, implement 140 includes a bucket. Alternatively, implement 140 may include a snow blower, loader, and/or another type of implement. In some examples, implement 140 may be operated using one or more hydraulic controls.

Operator cabin 150 is supported by machine body 110. In some implementations, a volume of the operator cabin 150 may be approximately forty cubic feet. In this regard, the volume of the operator cabin 150 may be approximately forty to forty three percent of an average volume of an interior of a standard vehicle and/or truck. This constrained space limits the number of positions where inputs for controlling the machine 100 and implement 140 can be positioned.

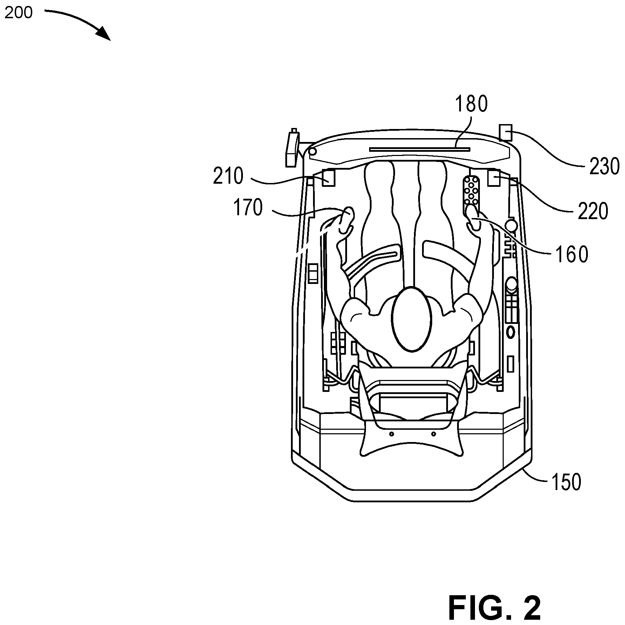

As shown in Fig. 1, operator cabin 150 includes a machine control component 160 (e.g., a first machine control component), a machine control component 170 (e.g., a second machine control component), and a display device 180. Machine control component 160 may include one or more input elements to generate signals that control an operation of display device 180 concurrently with controlling a movement of machine 100 and/or a movement of implement 140, as described in more detail below in connection with Fig. 2. Machine control component 160 may include a joystick, a lever, and/or a similar type of control component.

Machine control component 170 may include one or more input elements to generate signals that control a movement of machine 100 and/or a movement of implement 140. In some examples, unlike machine control component 160, machine control component 170 does not include one or more input elements to generate signals that control an operation of display device 180. In addition to machine control component 160, machine control component 170 also includes one or more input elements to generate signals that control an operation of display device 180. Machine control component 170 may include a joystick, a lever, and/or a similar type of control component.

Display device 180 may include a liquid crystal display (LCD), a light-emitting diode (LED) display, or another type of display capable of outputting graphical and/or textual information (e.g., information regarding machine 100, information regarding implement 140, and/or information regarding an environment associated with machine 100). The information regarding machine 100 may include information displaying gauges of machine 100 (e.g., fuel gauge, oil gauge, engine temperature gauge, and/or another gauge(s)).

The information regarding implement 140 may include information identifying an amount of wear (or an age) of implement 140, information identifying usage (e.g., type, amount (e.g., hours), among other examples) of implement 140, information identifying maintenance and/or service required by implement 140, among other examples. The information regarding the environment associated with machine 100 may include images and/or a video feed of a rearview of machine 100, images and/or a video feed of side views of machine 100, images and/or a video feed of a forward view of machine 100, and/or images and/or a video feed of an area surrounding machine 100.

As shown in Fig. 1, machine 100 includes a hydraulic system 190. Hydraulic system 190 may be configured to supply hydraulic fluid to control an operation of implement 140 and/or a movement of implement 140. For example, hydraulic system 190 may be configured to supply hydraulic fluid to cause implement 140 to perform one or more operations and/or cause implement 140 to move in one or more directions.

As indicated above, Fig. 1 is provided as an example. Other examples may differ from what was described in connection with Fig. 1.

Fig. 2 is a diagram of a top view 200 of operator cabin 150 of Fig. 1 described herein. As shown in Fig. 2, operator cabin 150 may include a first speaker 210, a second speaker 220, and a horn 230. First speaker 210, second speaker 220, and horn 230 may each be configured to provide a sound output. As an example, first speaker 210 and second speaker 220 may be configured to provide a sound output internally with respect to operator cabin 150. For instance, first speaker 210 and second speaker 220 may be configured to provide a sound output from an entertainment system of machine 100 (e.g., an audio video system), from a device of an operator of machine 100, among other examples. Horn 230 may be configured to provide a sound output externally with respect to operator cabin 150 (e.g., to provide a warning to one or more individuals in a vicinity of machine 100).

As shown in Fig. 2, an operator may control operation of machine 100 using machine control component 160 and machine control component 170. In some instances, the operator may control an operation of machine 100 using machine control component 160 concurrently with using machine control component 170.

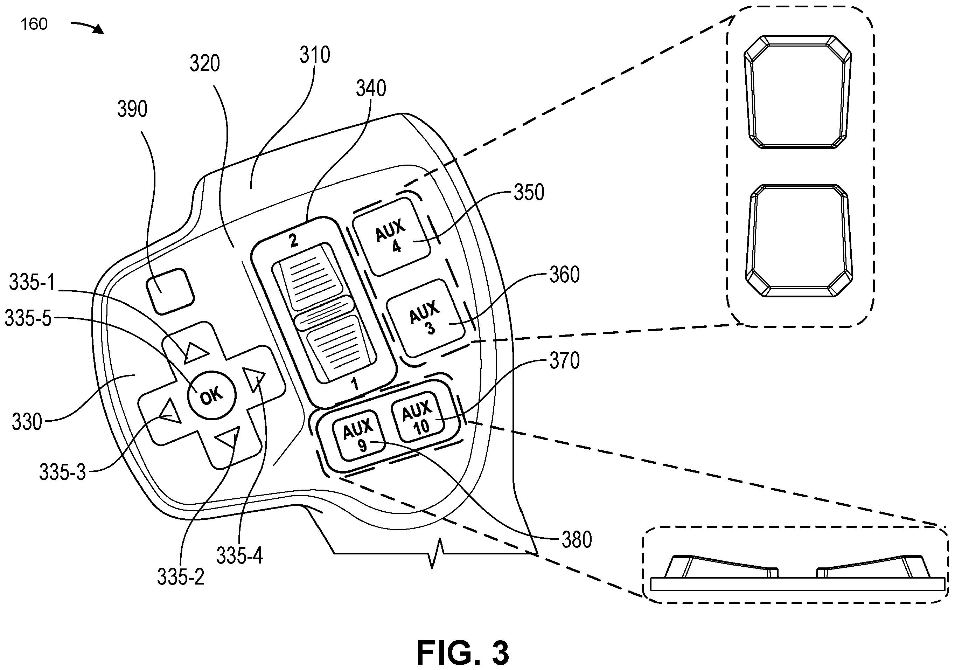

In some implementations, machine control component 160 may control a movement of implement 140 and machine control component 170 may control a movement of machine 100. For example, machine control component 160 may include hydraulic controls for controlling implement 140 (as explained in more detail below in connection with Fig. 3) and machine control component 170 may include controls for controlling ground engaging members 120. For instance, the operator may control a movement of implement 140 by interacting with machine control component 160 (e.g., interacting with the hydraulic controls) using a right hand while concurrently controlling a movement of machine 100 by interacting with machine control component 170 using a left hand.

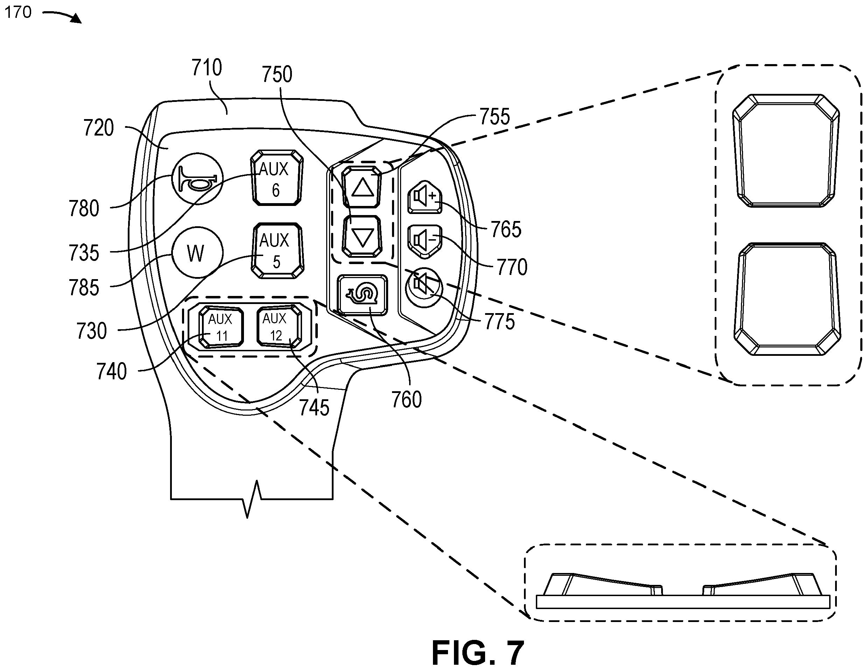

In some implementations, machine control component 160 may control a movement of machine 100 and machine control component 170 may control a movement of implement 140, which is the opposite configuration of that described in the preceding paragraph. For example, machine control component 160 may include controls for controlling ground engaging members 120 and machine control component 170 may include hydraulic controls for controlling implement 140 (as explained in more detail below in connection with Fig. 7). For instance, the operator may control a movement of machine 100 by interacting with machine control component 160 using the right hand while concurrently controlling a movement of implement 140 by interacting with machine control component 170 (e.g., interacting with the hydraulic controls) using the left hand.

In some implementations, machine control component 160 may control a movement of machine 100 and/or may control a movement of implement 140, and machine control component 170 may control a movement of machine 100 and/or may control a movement of implement 140. For example, machine control component 160 may include controls for controlling ground engaging members 120 and/or may include hydraulic controls for controlling implement 140. Similarly, machine control component 170 may include controls for controlling ground engaging members 120 and/or may include hydraulic controls for controlling implement 140. For instance, the operator may control a movement of machine 100 and/or implement 140 by interacting with machine control component 160 using the right hand while concurrently controlling a movement of machine 100 and/or implement 140 by interacting with machine control component 170 using the left hand.

With respect to controlling the movement of machine 100, a forward movement of machine control component 160 or machine control component 170 may cause machine 100 to move in a forward direction, and a backward movement of machine control component 160 or machine control component 170 may cause machine 100 to move in a backward direction. With respect to controlling the movement of implement 140, a forward movement of machine control component 160 or machine control component 170 may cause implement 140 to move in a forward or upward direction, and a backward movement of machine control component 160 or machine control component 170 may cause implement 140 to move in a backward (or reverse) or downward direction.

In some examples, machine control component 160 may control a forward movement and a backward movement of implement 140 and machine control component 170 may control lateral movements of implement 140. For example, machine control component 160 may include hydraulic controls for controlling the forward movement and the backward movement of implement 140 and machine control component 170 may include hydraulic controls for controlling the lateral movements of implement 140. With respect to the lateral movements of implement 140, assume that implement 140 is a blade, for example. In such example, the lateral movements of implement 140 may include tilting implement 140 to the left and/or tilting implement 140 to the right.

Alternatively to machine control component 160 controlling the forward movement and the backward movement of implement 140 and machine control component 170 controlling the lateral movements of implement 140, machine control component 160 may control the lateral movements of implement 140 and machine control component 170 may control the forward movement and the backward movement of implement 140. For example, machine control component 160 may include hydraulic controls for controlling the lateral movements of implement 140 and machine control component 170 may include hydraulic controls for controlling of the forward movement and the backward movement of implement 140.

In some implementations, machine control component 160 may control the forward movement, the backward movement, and the lateral movements of implement 140. For example, machine control component 160 may include hydraulic controls for controlling the forward movement of implement 140, controlling the backward movement of implement 140, and controlling the lateral movements of implement 140. Alternatively, machine control component 170 may control the forward movement, the backward movement, and the lateral movements of implement 140. For example, machine control component 170 may include hydraulic controls for controlling the forward movement of implement 140, controlling the backward movement of implement 140, and controlling the lateral movements of implement 140.

With respect to controlling the forward movement and the backward movement of implement 140, in some examples, a forward movement of machine control component 160 or machine control component 170 may cause implement 140 to move in a forward or upward direction. A backward movement of machine control component 160 or machine control component 170 may cause implement 140 to move in a backward or downward direction. With respect to controlling the lateral movements of implement 140, in some examples, lateral movements of machine control component 160 or machine control component 170 may cause corresponding lateral movements of implement 140.

Additionally, or alternatively, to controlling the movements of implement 140, machine control component 160 and/or machine control component 170 may control an opening and a closing of implement 140 (e.g., when implement 140 is a bucket or a similar implement having a movable cover or scraper (not shown)). For example, machine control component 160 may include hydraulic controls for controlling the opening of implement 140 and/or for controlling the closing of implement 140. Additionally, or alternatively, machine control component 170 may include hydraulic controls for controlling the opening of implement 140 and/or for controlling the closing of implement 140.

In some implementations, machine control component 160 and/or machine control component 170 may control an operation of implement 140. For example, machine control component 160 may include hydraulic controls for controlling an initiation of the operation, for controlling a termination of the operation, and/or for providing proportional control of the operation (e.g., for increasing a speed of the operation, for decreasing the speed of the operation, for increasing an intensity of the operation, for decreasing the intensity of the operation, among other examples).

Additionally, or alternatively, machine control component 170 may include hydraulic controls for controlling the initiation of the operation, for controlling the termination of the operation, and/or for providing proportional control of the operation. The operation may include a digging operation, a sweeping operation, a material moving operation (e.g., snow blowing, snow shoveling, rock moving, among other examples), a paving operation, a brush cutting operation, among other examples.

Machine control component 160 may be configured to control an operation of display device 180 concurrently with the controlled movements of machine 100 and/or implement 140 described above.

As indicated above, Fig. 2 is provided as an example. Other examples may differ from what was described in connection with Fig. 2.

Fig. 3 is a diagram of an example machine control component 160 described herein. The description below could equally apply to machine control component 170 (rather than machine control component 160) or to both machine control component 160 and machine control component 170.

As shown in Fig. 3, machine control component 160 may include an asymmetric grip portion 310 that includes an asymmetric faceplate 320. As shown in Fig. 3, asymmetric faceplate 320 may include an input element 330, an input element 340, an input element 350, an input element 360, an input element 370, an input element 380, and an input element 390. In some examples, machine control component 160 may have a different look and feel and/or include a greater number or a lesser number of input elements. The input elements of Fig. 3 may include buttons, switches, and/or other types of input elements.

Input element 330 may include input elements 335 (e.g., input elements 335-1 to 335-5). Input elements 335 may include buttons, switches, and/or other types of input elements. The operator may use input element(s) 335 of input element 330 to control the operation of display device 180 while concurrently using machine control component 170, machine control component 160, and/or one or more other input elements (e.g., input element 340, input element 350, input element 360, input element 370, and/or input element 380) to control a movement of machine 100 and/or an operation of implement 140. For example, while moving machine control component 160 with a right hand of the operator to control an operation of machine 100 or implement 140, the operator may control the operation of display device 180 by interacting with input element(s) 335 using a right thumb of the operator (e.g., to perform complex operation of display device 180, such as navigating different screens at different levels in order to navigate and select from potentially hundreds of items).

Input element 340, input element 350, input element 360, input element 370, and input element 380 may be part of hydraulic controls of machine control component 160. For example, input element 340, input element 350, input element 360, input element 370, and input element 380 may control hydraulic system 190 to cause hydraulic system 190 to supply hydraulic fluid to control an operation and/or a movement of implement 140. Input element 340, input element 350, input element 360, input element 370, and input element 380 may be configured to control hydraulic system 190 to cause different movements of implement 140.

Input element 340 may be configured to control an operation of implement 140 and/or a movement of implement 140. As shown in Fig. 3, input element 340 may be implemented as a scrolling input element (or a rolling input element). Input element 340 may be configured for proportional control of the operation and/or for proportional control of the movement of implement 140, in a manner similar to the manner described above in connection with Fig. 2. For example, scrolling (or rolling) input element 340 in a first direction (e.g., an upward direction) may increase a speed of the operation, increase an intensity of the operation, increase a speed of the movement, among other examples. Continuing with this example, scrolling (or rolling) input element 340 in a second direction (e.g., a downward direction) may decrease the speed of the operation, decrease an intensity of the operation, decrease the speed of the movement, among other examples.

As shown in Fig. 3, a pair of input elements (a pair of input element 350 and input element 360, a pair of input element 370 and input element 380, among other examples) may have a same irregular shape and may be positioned adjacent to and as mirrored images of each other. As an example, input element 350 and input element 360 may have a same irregular shape and may be positioned adjacent to and as mirrored images of each other. As another example, input element 370 and input element 380 may have a same irregular shape and may be positioned adjacent to and as mirrored images of each other. As shown in Fig. 3, the irregular shape may be a keystone shape.

As further shown in Fig. 3, a first side, of an input element of a pair of input elements, may be raised higher than a second side of the input element. The first side may be opposite the second side. For instance, a height of first sides, of a first input element and a second input element of the pair of input elements, may be lower than a height of second sides of the first input element and the second input element. The first sides may be closer to each other than the second sides.

In some examples, input element 350, input element 360, input element 370, and input element 380 may be configured to control movements of implement 140. For example, input element 350 may cause a movement of implement 140 in a forward or upward direction, input element 360 may cause a movement of implement 140 in a reverse or downward direction, input element 370 may cause a lateral movement of implement 140 in a first direction, and input element 380 may cause a lateral movement of implement 140 in a second direction (opposite the first direction).

In some examples, input element 350, input element 360, input element 370, and input element 380 may be configured to control an operation of implement 140. For example, one of input element 350, input element 360, input element 370, or input element 380 may be configured to initiate the operation while another one of input element 350, input element 360, input element 370, or input element 380 may be configured to terminate the operation. Alternatively, the operation could be performed only while the associated one of input element 350, input element 360, input element 370, or input element 380 is pressed, and when that associated one of input element 350, input element 360, input element 370, or input element 380 is released, the operation ends.

In some instances, a pair of input elements (of input element 350, input element 360, input element 370, and input element 380) may be configured for proportional control, as explained above in connection with input element 340. For example, input element 350 may increase a speed of an operation of implement 140 and input element 360 may decrease the speed of the operation of implement 140, input element 370 may increase an intensity of the operation of implement 140 and input element 380 may decrease the intensity of the operation of implement 140, among other examples.

In some examples, input element 350, input element 360, input element 370, and input element 380 may be used in connection with different implements that may replace implement 140 mounted on lift arms 130 and/or that may be connected to machine 100 in addition to implement 140. For example, input element 350 may be used to adjust a configuration of machine 100 to operate a second implement when the second implement replaces implement 140 and/or when the second implement is connected to machine 100, input element 360 may be used to adjust a configuration of machine 100 to operate a third implement when the third implement replaces implement 140 and/or when the third implement is connected to machine 100, and so on.

In some implementations, input element 330, input element 340, input element 350, input element 360, input element 370, and/or input element 380 may be configurable (e.g., programmable) to cause machine 100, implement 140, or display device 180 to perform an action. For example, input element 330, input element 340, input element 350, input element 360, input element 370, and/or input element 380 may be programmed to cause machine 100, implement 140, and/or display device 180 to perform any one or more of the actions described above, such as any one or more of the actions described above in connection with input element 330, input element 340, input element 350, input element 360, input element 370, and/or input element 380.

Input element 390 may be programmed to perform an action desired by the operator. In some instances, input element 390 may be programmed to perform an action frequently performed when the operator is operating machine 100. As an example, input element 390 may be programmed to cause machine 100, implement 140, and/or display device 180 to perform any one or more of the actions described above, such as any one or more of the actions described above in connection with input element 330, input elements 335-1 to 335-5, input element 340, input element 350, input element 360, input element 370, input element 380, and/or other input elements described herein.

In some implementations, input element 340, input element 350, input element 360, input element 370, input element 380, and/or input element 390 may be part of primary controls of machine 100 (e.g., a first subset of the primary controls). Input elements 330 and 335-1 to 335-5 may be part of secondary controls of machine 100 (e.g., a first subset of the secondary controls). The primary controls may refer to input elements that are used more frequently by the operator than the secondary controls (e.g., more frequently than input elements included in the secondary controls). In some examples, the primary controls may include input elements that control an operation of machine 100, a movement of implement 140, and/or an operation of implement 140. As shown in Fig. 3, the primary controls may be provided on a first portion of faceplate 320 and the secondary controls may be provided on a second portion of faceplate 320.

As shown Fig. 3, the input elements may be arranged to enable the operator to reach the input elements using a thumb while the operator is holding a shaft portion of machine control component 160. In other words, a distance between the input elements may enable the operator to reach all the input elements with the thumb without having to release the grasp on the shaft portion of machine control component 160. In some instances, the distance may be determined based on a hand size of an average operator.

As indicated above, Fig. 3 is provided as an example. Other examples may differ from what was described in connection with Fig. 3. For example, in some implementations, input element 330 and input elements 335 may be provided on machine control component 170 (instead of machine control component 160). Alternatively, a first subset of input elements 335 may be provided on machine control component 160 and a second subset of input elements 335 may be provided on machine control component 170. For example, input elements 335-1 to 335-4 may be provided on machine control component 160 and input element 335-5 may be provided on machine control component 170, or vice versa.

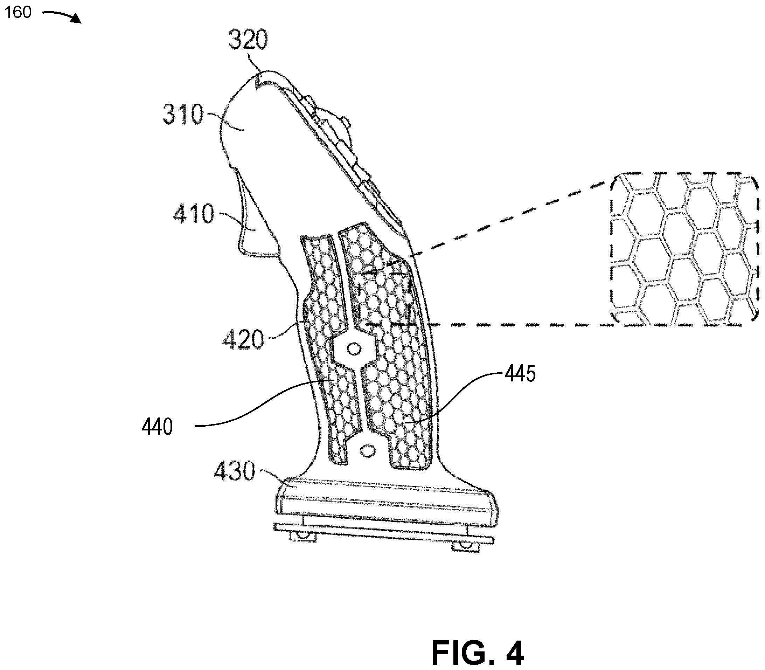

Fig. 4 is a diagram of a left side view of an example machine control component 160 described herein. The elements of machine control component 160 have been described above with respect to Fig. 3. As shown in Fig. 4, machine control component 160 may include an input element 410, a shaft portion 420, and a base portion 430. Input element 410 may be configured to adjust a gear ratio of a transmission of machine 100. The adjustment of the gear ratio may adjust a speed of machine 100 resulting from a movement of machine control component 160 and/or a movement of machine control component 170.

As shown in Fig. 4, shaft portion 420 may include a plurality of textured sections. For example, shaft portion 420 may include a first textured section 440 and a second textured section 445. The plurality of textured sections may be configured to improve one or more ergonomic aspects of machine control component 160 with respect to existing joysticks of existing machines. For example, the plurality of textured sections may be configured to improve a grip of the operator (e.g., when interacting with shaft portion 420).

Base portion 430 may be configured to enable machine control component 160 to be mounted to a portion of operator cabin 150 (as described above in connection with Fig. 2).

As indicated above, Fig. 4 is provided as an example. Other examples may differ from what was described in connection with Fig. 4, such as with regard to the number and/or placement of the various input elements and textured sections provided.

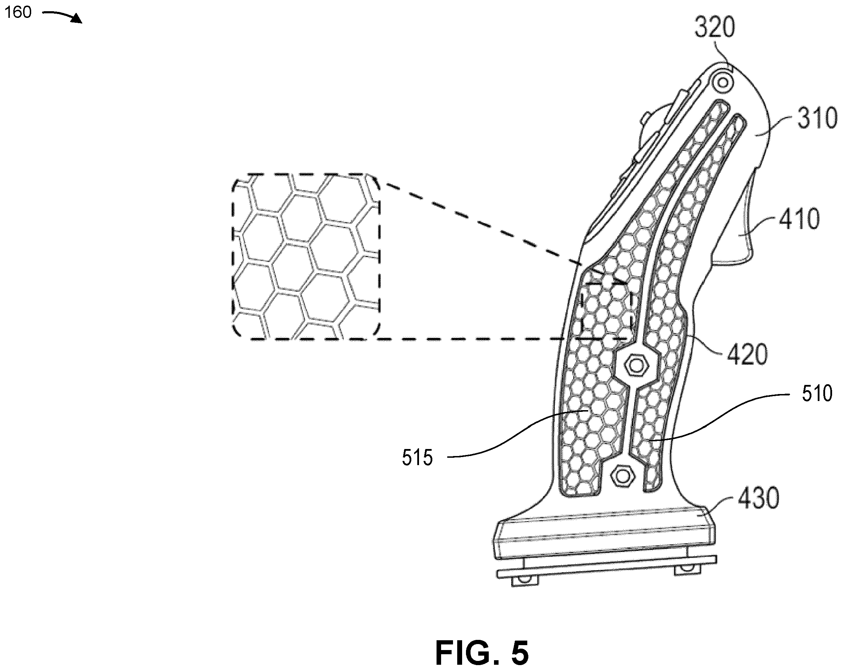

Fig. 5 is a diagram of a right side view of an example machine control component 160 described herein. The elements of machine control component 160 have been described above with respect to Figs. 3 and 4. As shown in Fig. 5, shaft portion 420 may include a plurality of textured sections. For example, shaft portion 420 may include a third textured section 510 and a fourth textured section 515. As explained above, the plurality of textured sections may be configured to improve a grip of the operator.

As indicated above, Fig. 5 is provided as an example. Other examples may differ from what was described in connection with Fig. 5.

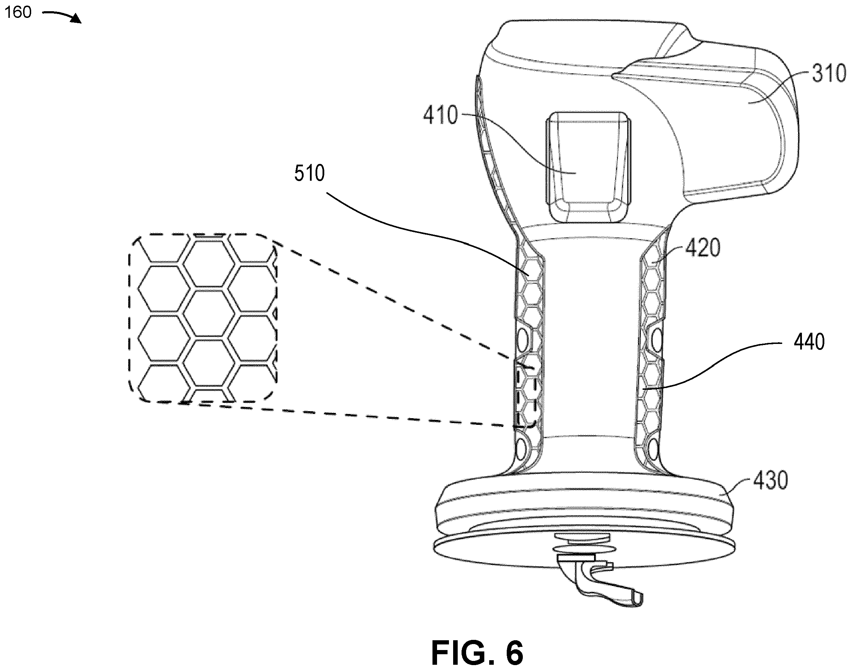

Fig. 6 is a diagram of a rear view of an example machine control component 160 described herein. The elements of machine control component 160 have been described above with respect to Figs. 3-5. As shown in Fig. 6, first textured section 440 may be adjacent to third textured section 510.

As indicated above, Fig. 6 is provided as an example. Other examples may differ from what was described in connection with Fig. 6, such as with regard to the number and/or placement of the various input elements and textured sections provided.

Fig. 7 is a diagram of an example machine control component 170 described herein. The description below could equally apply to machine control component 160 (rather than machine control component 170) or to both machine control component 160 and machine control component 170.

As shown in Fig. 7, machine control component 170 may include an asymmetric grip portion 710 that includes an asymmetric faceplate 720. As shown in Fig. 7, asymmetric faceplate 720 may include an input element 730, an input element 735, an input element 740, an input element 745, an input element 750, an input element 755, an input element 760, an input element 765, an input element 770, an input element 775, an input element 780, and an input element 785. In some examples, machine control component 170 may have a different look and feel and/or include a greater number or a lesser number of input elements. The input elements of Fig. 7 may include buttons, switches, and/or other types of input elements.

Input element 730, input element 735, input element 740, and input element 745 may be configured to perform functions similar to the functions described above in connection with input element 350, input element 360, input element 370, and input element 380. In some implementations, input element 730, input element 735, input element 740, and input element 745 may be part of hydraulic controls of machine control component 170.

Input element 750, input element 755, and input element 760 may be configured to control a speed of machine 100. For example, input element 750 may be configured to increase the speed of machine 100, input element 760 may be configured to decrease the speed of machine 100, and input element 760 may be configured to set the speed of machine 100 to a threshold speed. The threshold speed may be associated with an operation being performed or to be performed by machine 100 and/or by implement 140. The operation may be an operation that requires the machine 100 to move slowly (e.g., move at a speed that is less than a typical operating speed of machine 100). The operator may use the input element 760 to set the speed of machine 100 to the threshold speed, may use input element 750 to increase the speed of machine 100 (e.g., after the speed has been set to the threshold speed), and/or use input element 755 to reduce the speed of machine 100 (e.g., after the speed has been set to the threshold speed).

Input element 765, input element 770, and input element 775 may be configured to control a sound output by machine 100. For example, input element 765, input element 770, and input element 775 may be configured to control a sound output by first speaker 210 and/or second speaker 220. For instance, input element 765 may be configured to increase a volume of the sound output by first speaker 210 and/or second speaker 220, input element 770 may be configured to decrease a volume of the sound output by first speaker 210 and/or second speaker 220, and input element 775 may be configured to mute the sound output by first speaker 210 and/or second speaker 220.

Input element 780 may be configured to control a sound output by machine 100. For example, input element 780 be configured to cause horn 230 to provide a sound output.

Input element 785 may be configured to cause information regarding implement 140, which is based on data provided by implement 140, to be presented on display device 180. The information regarding implement 140 has been described above in connection with Fig. 1. In some implementations, one or more work tools may be connected to machine 100 and/or implement 140. In this regard, input element 785 may cause information regarding the one or more work tools to be presented on display device 180, thereby enabling the operator to select (via display device 180 by using input element 330) a particular work tool to perform a particular operation. For example, the operator may select a first work tool to perform a first operation, select a second work tool to perform a second operation, and so on.

In some examples, input element 730, input element 735, input element 740, input element 745, input element 780, and input element 785 may be part of the primary controls of machine 100 (e.g., a second subset of the primary controls). Input element 750, input element 755, input element 760, input element 765, input element 770, and input element 775 may be part of the secondary controls of machine 100 (e.g., a second subset of the secondary controls). As shown in Fig. 7, the primary controls may be provided on a first portion of faceplate 720 and the secondary controls may be provided on a second portion of faceplate 720.

As shown Fig. 7, the input elements may be arranged to enable the operator to reach the input elements using a thumb while the operator is holding a shaft portion of machine control component 170. In other words, a distance between the input elements may enable the operator to reach all the input elements with the thumb without having to release the grasp on the shaft portion of machine control component 170. In some instances, the distance may be determined based on a hand size of an average operator.

As indicated above, Fig. 7 is provided as an example. Other examples may differ from what was described in connection with Fig. 7. For example, in some implementations, input element 750, input element 755, input element 760, input element 765, input element 770, input element 775, input element 780, and input element 785 may be provided on machine control component 160 (instead of machine control component 170).

Alternatively, a first subset of input element 750, input element 755, input element 760, input element 765, input element 770, input element 775, input element 780, and input element 785 may be provided on machine control component 160 and a second subset of input element 750, input element 755, input element 760, input element 765, input element 770, input element 775, input element 780, and input element 785 may be provided on machine control component 170. For example, input element 750, input element 755, and input element 760 may be provided on machine control component 160 and input element 765, input element 770, input element 775, input element 780, and input element 785 may be provided on machine control component 170, or vice versa.

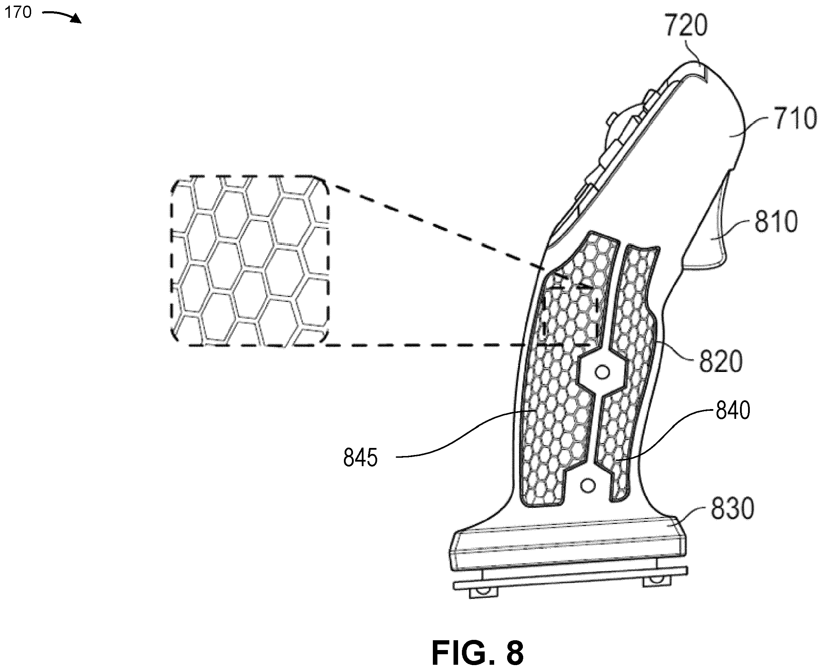

Fig. 8 is a diagram of a left side view of an example machine control component 170 described herein. The elements of machine control component 170 have been described above with respect to Fig. 7. As shown in Fig. 8, machine control component 170 may include an input element 810, a shaft portion 820, and a base portion 830. Input element 810 may be configured to adjust the gear ratio of the transmission of machine 100. The adjustment of the gear ratio may adjust a speed of machine 100 resulting from a movement of machine control component 170 and/or a movement of machine control component 160.

As shown in Fig. 8, shaft portion 820 may include a plurality of textured sections. For example, shaft portion 820 may include a first textured section 840 and a second textured section 845. The plurality of textured sections may be configured to improve one or more ergonomic aspects of machine control component 170 with respect to existing joysticks of existing machines. For example, the plurality of textured sections may be configured to improve a grip of the operator (e.g., when interacting with shaft portion 820).

Base portion 830 may be configured to enable machine control component 170 to be mounted to a portion of operator cabin 150 (as described above in connection with Fig. 2).

As indicated above, Fig. 8 is provided as an example. Other examples may differ from what was described in connection with Fig. 8, such as with regard to the number and/or placement of the various input elements and textured sections provided.

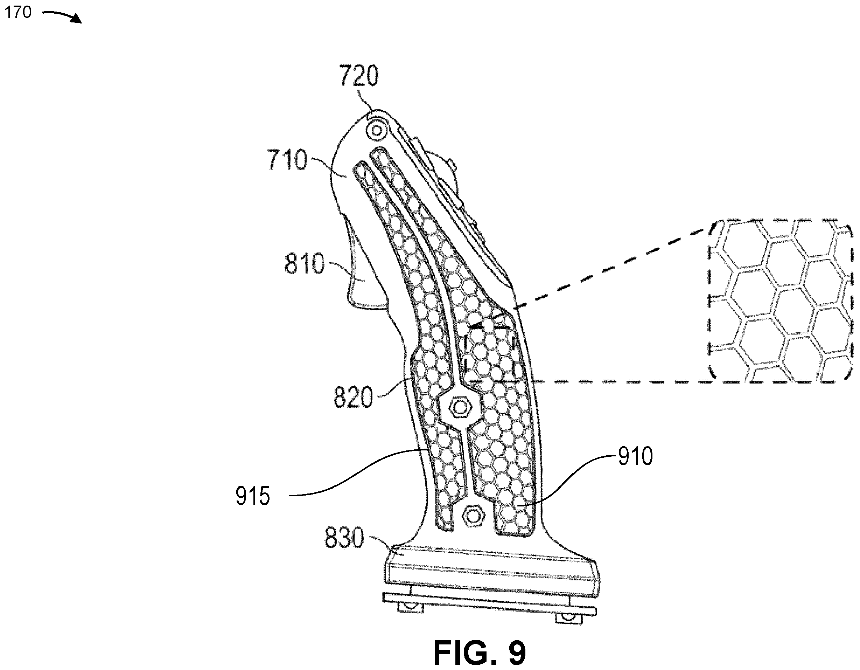

Fig. 9 is a diagram of a right side view of an example machine control component 170 described herein. The elements of machine control component 170 have been described above with respect to Figs. 7 and 8. As shown in Fig. 9, shaft portion 820 may include a plurality of textured sections. For example, shaft portion 820 may include a third textured section 910 and a fourth textured section 915. As explained above, the plurality of textured sections may be configured to improve one or more ergonomic aspects of machine control component 170 with respect to existing joysticks of existing machines.

As indicated above, Fig. 9 is provided as an example. Other examples may differ from what was described in connection with Fig. 9, such as with regard to the number and/or placement of the various input elements and textured sections provided.

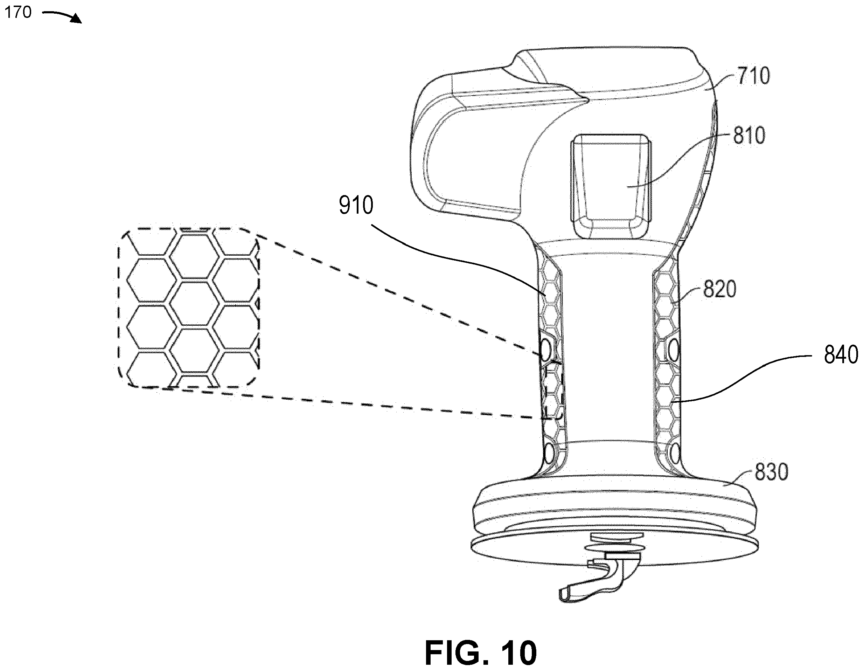

Fig. 10 is a diagram of a rear view of an example machine control component 170 described herein. The elements of machine control component 170 have been described above with respect to Figs. 7-9. As shown in Fig. 10, first textured section 840 may be adjacent to third textured section 910.

As indicated above, Fig. 10 is provided as an example. Other examples may differ from what was described in connection with Fig. 10, such as with regard to the number and/or placement of the various input elements and textured sections provided.

### Industrial Applicability

The present disclosure relates to machine control components (e.g., joysticks) that control various operations of a machine and/or an implement of the machine. For example, the machine control components may include input elements (e.g., hydraulic controls) configured to control various operations and/or movements of the implement, input elements configured to control a sound output by the machine, input elements configured to control a speed of the machine, and input elements configured to control an operation of a display device of the machine concurrently with an operation of the machine.

The disclosed machine control components address spatial constraints (in an operator cabin of the machine) that limit a number of controls that may be provided in the operator cabin. Additionally, the disclosed machine control components may prevent an operator from causing the machine to suspend a task performed by the machine in order to interact with different input elements (e.g., to control an operation of the machine) and cause the machine to resume performing the task after interacting with the input elements. Causing the machine to suspend and resume performing a task in such a manner may waste machine resources and/or computing resources that are used to cause the machine to suspend performing the task and machine resources and/or computing resources that are used to cause the machine to resume performing the task.

Several advantages may be associated with the disclosed machine control components. For example, the disclosed machine control components may provide the input elements (discussed above) in a compact manner that addresses spatial constraints in the operator cabin of the machine. The asymmetric shapes of the disclosed machine control components and input elements may help an operator grasp, identify and operate those components and input elements with greater certainty. Additionally, or alternatively, the input elements are available to be selected by the operator without requiring the operator to remove a hand from the disclosed machine control components. Accordingly, the disclosed machine control components may enable the operator to interact with different input elements to control various operations of the machine) without causing the machine to suspend performing the task and resume performing the task. Accordingly, the disclosed machine control components may preserve machine resources and/or computing resources that would have otherwise been used to cause the machine to suspend performing the task and resume performing the task. Further, by providing the input elements together on the disclosed machine control components, rather than on one or more of the interior surfaces of the operator cabin, the risk of an operator inadvertently activating an input element located on such an interior surface due to the operator moving a body part or shifting their position can be eliminated.

The foregoing disclosure provides illustration and description, but is not intended to be exhaustive or to limit the implementations to the precise forms disclosed. Modifications and variations may be made in light of the above disclosure or may be acquired from practice of the implementations. Furthermore, any of the implementations described herein may be combined unless the foregoing disclosure expressly provides a reason that one or more implementations cannot be combined. Even though particular combinations of features are recited in the claims and/or disclosed in the specification, these combinations are not intended to limit the disclosure of various implementations. Although each dependent claim listed below may directly depend on only one claim, the disclosure of various implementations includes each dependent claim in combination with every other claim in the claim set.

As used herein, "a," "an," and a "set" are intended to include one or more items, and may be used interchangeably with "one or more." Further, as used herein, the article "the" is intended to include one or more items referenced in connection with the article "the" and may be used interchangeably with "the one or more." Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of'). Further, spatially relative terms, such as "below," "lower," "above," "upper," and the like, may be used herein for ease of description to describe one element or feature's relationship to another element(s) or feature(s) as illustrated in the figures. The spatially relative terms are intended to encompass different orientations of the apparatus, device, and/or element in use or operation in addition to the orientation depicted in the figures. The apparatus may be otherwise oriented (rotated 90 degrees or at other orientations) and the spatially relative descriptors used herein may likewise be interpreted accordingly.

## Claims

1. A joystick (170) for operating a machine (100), the joystick comprising:
an asymmetric grip portion (710) with an asymmetric faceplate (720),
wherein the asymmetric faceplate (720) comprises primary controls and secondary controls,
wherein the primary controls include:
a first plurality of input elements (730, 735, 740, and 745) configured to control an operation of an implement (140) mounted to the machine, and
an input element (785) configured to cause information regarding the implement, which is based on data provided by the implement, to be presented on a display device (180) of the machine, and
wherein the secondary controls include a second plurality of input elements (765, 770, 775, and 780) at least one of which is configured to control a sound output by the machine.

2. The joystick (170) according to claim 1, wherein a pair of input elements (730 and 735, 740 and 745), of the plurality of input elements, have a same irregular shape and are positioned adjacent and as mirrored images of each other.

3. The joystick (170) according to any one of claims 1 and 2, wherein the secondary controls further comprise:
a third plurality of input elements (750, 755, and 760) configured to control a speed of the machine.

4. The joystick (170) according to any one of claims 1-3, wherein a first input element (730), of the first plurality of input elements, is configured to cause a movement of the implement in a first direction,
wherein a second input element (735), of the first plurality of input elements, is configured to cause a movement of the implement in a second direction opposite the first direction,
wherein a third input element (740), of the first plurality of input elements, is configured to cause a movement of the implement in a third direction different than the first direction and the second direction, and
wherein a fourth input element (745), of the first plurality of input elements, is configured to cause a movement of the implement in a fourth direction opposite the third direction.

5. The joystick (170) according to any one of claims 1-4, wherein the plurality of input elements (730, 735, 740, and 745) are configured to control a hydraulic system (190), of the machine, to cause different movements of the implement (140).

6. A machine (100), comprising:
a first machine control component (160) comprising a first asymmetric grip portion (310) with a first asymmetric faceplate (320),
wherein the first asymmetric faceplate comprises:
a first subset of primary controls that include a first plurality of input elements (340, 350, 360, 370, and 380) configured to control an operation of an implement (140) mounted to the machine, and
a first subset of secondary controls that include a second plurality of input elements (335-1 to 335-5) configured to control an operation of a display device (180) of the machine; and
a second machine control component (170) comprising a second asymmetric grip portion (710) with a second asymmetric faceplate (720),
wherein the second asymmetric faceplate comprises:
a second subset of the primary controls that include a third plurality of input elements (730, 735, 740, and 745) configured to control an operation of the implement (140), and
a second subset of the secondary controls that include an input element (785) configured to cause information regarding the implement, which is based on data provided by the implement, to be presented on the display device.

7. The machine (100) of claim 6, wherein the second subset of the secondary controls further include:
a fourth plurality of input elements (765, 770, and 775) configured to control an audio system (210, 220) of the machine, and
a fifth plurality of input elements (750, 755, and 760) configured to control a speed of the machine.

8. The machine (100) according to any one of claims 6 and 7, wherein the second machine control component (170) further comprises a shaft portion (820), and
wherein the shaft portion (720) comprises a plurality of textured sections (840, 845, 910, 915).

9. The machine (100) according to any one of claims 6-8, wherein each input element, of the first plurality of input elements (340, 350, 360, 370, and 380) and the third plurality of input elements (730, 735, 740, and 745), is configured to cause a different movement of the implement.

10. The machine (100) according to any one of claims 6-9, wherein a first input element (350), of the first plurality of input elements, is configured to cause a movement of the implement in a first direction, and
wherein a second input element (360), of the first plurality of input elements, is configured to cause a movement of the implement in a second direction opposite the first direction, and
wherein the first input element and the second input element have a same irregular shape and are positioned adjacent and as mirrored images of each other, and
wherein a height of first sides, of the first input element and the second input element, is lower than a height of second sides of the first input element and the second input element, and
wherein the first sides are closer to each other than the second sides.
